# EUROPÄISCHE PATENTSCHRIFT

(11) **EP 0 880 548 B1**
(45) Veröffentlichungstag und Bekanntmachung des Hinweises auf die Patenterteilung: **12.07.2000**
(21) Anmeldenummer: 97914152.0
(22) Anmeldetag: 10.02.1997
(51) Int. Cl.: C08F 2/10, C08F 2/24

(54) **VERFAHREN ZUR HERSTELLUNG VON DISPERSIONEN WASSERLÖSLICHER VINYLPOLYMERE UND STABILISATOR ZUR DURCHFÜHRUNG DES VERFAHRENS**
PROCESS FOR PRODUCING DISPERSIONS OF WATER-SOLUBLE VINYL POLYMERS AND STABILIZER FOR CARRYING OUT THE PROCESS
PROCEDE DE PRODUCTION DE DISPERSIONS DE POLYMERES VINYLIQUES HYDROSOLUBLES ET STABILISANT POUR METTRE EN OEUVRE LEDIT PROCEDE

(30) Priorität: 13.02.1996 DE 19606899
(43) Veröffentlichungstag der Anmeldung: 02.12.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: JAEGER, Werner, D-14532 Kleinmachnow (DE); ZIMMERMANN, Arvid, D-13187 Berlin (DE); HAHN, Mathias, D-14557 Wilhelmshorst (DE); HILDEBRANDT, Volker, 68169 Mannheim (DE); REICHERT, Karl, Heinz, D-14055 Berlin (DE)
(86) Internationale Anmeldenummer: DE9700288
(87) Internationale Veröffentlichungsnummer: WO9730094

(56) Entgegenhaltungen:
- EP-A- 0 363 319
- GB-A- 2 206 591

## Beschreibung

Die vorliegende Erfindung betrifft ein Verfahren zur Herstellung wasserlöslicher Vinylpolymere und einen Stabilisator zur Durchführung dieses Verfahrens.

Wasserlösliche, insbesondere kationische Vinylpolymere werden technisch in großem Umfang als Prozeßhilfsmittel für die Durchführung beispielsweise von Trennprozessen bei der Wasseraufbereitung bzw. Abwasserreinigung, in der Papier-, Kohle- und Erzindustrie, in der Erdölgewinnung oder auch in der Nahrungsgüterwirtschaft eingesetzt. Sie dienen dabei unter anderem zur Flockung, Koagulation, Retention oder Entwässerung. Trotz der meist geringen Einsatzmengen besitzen diese wasserlöslichen Vinylpolymere oft technologiebestimmende Bedeutung.

Die Herstellung dieser Polymere erfolgt nach dem Stand der Technik durch radikalische Homo- oder Copolymerisation in homogener oder heterogener Phase. Die homogene Lösungspolymerisation in Wasser hat den Nachteil, daß bereits bei Polymergehalten unterhalb 10 Masse-% hochviskose Systeme vorliegen, die eine weitere Erhöhung des Wirkstoffgehaltes nicht zulassen. Der dadurch bedingte niedrige Polymeranteil im Finalprodukt führt zu schlechten Raum-Zeit-Ausbeuten der Synthese und zu erhöhten Transportkosten beim Transport der Produkte zum Anwender.

Polymerisationen in heterogener Phase, wie beispielsweise die Invers-Emulsionspolymerisation in organischen Lösungsmitteln als Trägerphase, ergeben teilweise wesentlich höhere Feststoffgehalte. Sie besitzen jedoch den Nachteil, daß das Arbeiten mit Lösungsmitteln besondere Schutzmaßnahmen erfordert und daß bei der Applikation der Produkte das gesamte Lösungsmittel in die Umwelt freigesetzt wird. Die Invers-Suspensionspolymerisation in hydrophoben, brennbaren Lösungsmitteln als Trägerphase führt zwar nach Isolierung und Trocknung der Polymere zu pulverförmigen Produkten; der mehrstufige Prozeß ist jedoch kostenintensiv und benötigt viel Energie.

Aufgrund der Nachteile einer Polymerisation in heterogener Phase mit organischen Lösungsmitteln wurde daher die Herstellung von Dispersionen wasserlöslicher Polymere unter Verzicht auf organische Lösungsmittel als Trägerphase vorgeschlagen. Die CA 2 096 472 und die US 5 403 883 beschreiben die Polymerisation einer Kombination von wasserlöslichen und hydrophoben Vinylmonomeren, gegebenenfalls in Kombination mit einem amphiphatischen Monomer, in Gegenwart eines Polyalkylenethers oder eines Polyelektrolyten, der mit dem zu dispergierenden Polymer unverträglich ist und Molekulargewichte < 5 * 10⁵ g/mol hat. Der Polyalkylenether oder der Polyelektrolyt dient dabei als Dispersionsstabilisator. Vorzugsweise wird Poly(diallyldimethylammoniumchlorid) verwendet. Das resultierende dispergierte Polymer besitzt Molmassen von wenigstens 10⁶ g/mol. Nachteilig an dem in der CA 2 096 472 und der US 5 403 883 offengelegten Verfahren ist, daß erhebliche Mengen an Dispersionsstabilisatoren, und zwar bis zu 80 Masse-% bezogen auf die insgesamt eingesetzten Monomere, zur Anwendung kommen. Weiterhin können im Verlauf der Polymerisation Viskositätsmaxima auftreten, so daß die Viskosität des polymerisierenden Systems unter Umständen größer ist als die Viskosität des polymerisierten Endproduktes.

Die EP 0 183 466 beschreibt die Polymerisation wasserlöslicher Monomere in wäßrigen Lösungen anorganischer Salze in Gegenwart von Polyolen mit Molekulargewichten bis 600 g/mol und/oder Polyelektrolyten, die durch Homopolymerisation ionischer Vinylmonomere oder deren statistische Copolymerisation gewonnen wurden, als Dispersionsstabilisatoren.

Die US 4 380 600 beschreibt die Copolymerisation von wasserlöslichen und wasserunlöslichen Vinylmonomeren zu wasserlöslichen Copolymeren in wäßrigen Lösungen anorganischer Salze oder bei Zusatz des Salzes nach beendeter Reaktion. Als Dispersionsstabilisatoren werden wasserlösliche Polymere mit Molmassen zwischen 300 und 10 000 000 g/mol verwendet, die vorzugsweise eine Ether-, Hydroyl- oder Carboxylgruppe in ihrer Struktureinheit enthalten, beispielsweise Polyethylenglykol, Polyethylenoxid oder Polyvinylalkohol.

Nachteilig an den in der EP 0 183 466 und der US 4 380 600 beschriebenen Verfahren ist insbesondere, daß die Viskosität der resultierenden Dispersionen vergleichsweise hoch ist. Von besonderem Nachteil ist weiterhin, daß im Verlauf der Polymerisation Viskositätsmaxima durchlaufen werden, die im Bereich der Viskosität bei herkömmlicher Lösungspolymerisation liegen und daher die Prozeßtechnik erschweren.

Nachteilig an sämtlichen hier genannten Verfahren des Standes der Technik ist, daß die resultierenden Dispersionen bereits nach relativ kurzer Zeit koagulieren und dadurch die Lagerfähigkeit beschränkt ist.

Aufgabe der vorliegenden Erfindung ist es, ein einfaches Syntheseverfahren zur Herstellung von Dispersionen wasserlöslicher Vinylpolymere zur Verfügung zu stellen, wobei insbesondere langzeitstabile Dispersionen mit niedriger Viskosität sowohl des polymerisierenden Systems als auch des polymerisierten Endproduktes der Dispersion angestrebt werden. Weiterhin ist es Aufgabe der vorliegenden Erfindung, einen Stabilisator zur Verfügung zu stellen, mit dem Dispersionen wasserlöslicher Vinylpolymere mit den genannten Eigenschaften hergestellt werden können.

Diese Aufgabe wird durch das erfindungsgemäße Verfahren und den erfindungsgemäßen Stabilisator gemäß der Oberbegriffe in Verbindung mit den kennzeichnenden Merkmalen der Ansprüche 1 bzw. 27 gelöst.

Durch die radikalische Homo- bzw. Copolymerisation wasserlöslicher Vinylpolymere in einer wäßrigen Lösung von Salzen, der ein erfindungsgemäßer Stabilisator zugegeben wurde, werden Dispersionen erzeugt, die eine geringe Viskosität sowohl des polymerisierenden als auch des polymerisierten Systems besitzen, und die hervorragende Langzeitstabilität zeigen. Auch nach längerer Lagerung können beispielsweise Bodensätze durch einfaches Schütteln redispergiert werden. Der erfindungsgemäße Stabilisator besteht aus einem Pfropfcopolymer, dessen Rückgrat aus Polyethylenoxid und dessen Pfropfäste aus kationischen Vinylmonomeren gebildet sind.

Vorteilhaft an dem erfindungsgemäßen Verfahren ist, daß im Vergleich zum Stand der Technik ein verringerter Anteil an Stabilisator benötigt wird und zugleich das Finalprodukt einen hohen Polymeranteil, d.h. einen hohen Endumsatz zeigt. Dadurch ist die Raum-Zeit-Ausbeute der Polymerisation sehr hoch. Weitere Vorteile des erfindungsgemäßen Verfahrens bestehen darin, daß die Polymerisation auch bis zu hohen Umsätzen mit einer gleichmäßigen Geschwindigkeit verläuft. Durch den hohen Polymeranteil im Finalprodukt entstehen weiterhin nur geringe Transportkosten für den Anwender bezogen auf die Masse des zu transportierenden Vinylpolymers.

Vorteilhafte Weiterbildungen des erfindungsgemäßen Verfahrens und des erfindungsgemäßen Stabilisators ergeben sich aus den abhängigen Ansprüchen.

Vorteilhaft können Pfropfcopolymere als Stabilisatoren verwendet wird, deren Pfropfäste aus den Monomeren Diallyldimethylammoniumchlorid, Vinylpyridiumhalogenid und/oder N-Vinylimidazoliumhalogenid bestehen. Weiterhin eignen sich Pfropfcopolymere als Stabilisatoren besonders gut, deren Pfropfäste aus Monomeren der allgemeinen Formel

R₁-C(=CH₂)-CO-D-E-N⁺(R₂,R₃,R₄) X⁻

gebildet werden, wobei
R₁ Wasserstoff oder einen Methylrest,
R₂ einen Alkylrest mit 1 bis 2 Kohlenstoffatomen,
R₃ einen Alkylrest mit 1 bis 2 Kohlenstoffatomen,
R₄ einen Alkylrest mit 1 - 6 Kohlenstoffatomen oder einen Benzylrest,
D die Gruppierungen NH oder 0,
E einen Alkylenrest oder Hydroxyalkylenrest mit 2 bis 6 Kohlenstoffatomen und
X ein Halogenid, Acetat oder Methosulfat bedeuten.

Als Stabilisator können insbesondere Pfropfcopolymere verwendet werden, deren Pfropfäste eine Molmasse zwischen 1000 und 3000000 g/mol besitzen und/oder deren Polyethylenoxid-Polymerrückgrat eine Molmasse zwischen 2000 und 2000000 g/mol besitzt.

Ein besonders vorteilhafter Verlauf der Polymerisation und besonders vorteilhafte Eigenschaften der erhaltenen Dispersion werden erreicht, wenn kationische, hydrophob modifizierte Vinylmonomere homopolymerisiert oder kationische, hydrophob modifizierte und/oder nichtionische, hydrophob modifizierte Vinylmonomere mit kationischen und/oder nichtionischen Vinylcomonomeren copolymerisiert werden. Besonders vorteilhaft erweist sich dabei die Copolymerisation von hydrophob modifizierten Vinylmonomeren mit nichthydrophob modifizierten Vinylcomonomeren. Dabei genügt es, nur geringe Mengen der kostenintensiven hydrophob modifizierten Vinylmonomere einzusetzen, so daß sich gegenüber der Homopolymerisation von lediglich hydrophob modifizierten Vinylmonomeren Kostenvorteile ergeben.

Für die Homopolymerisation sind kationische, hydrophob modifizierten Vinylmonomere geeignet, die die allgemeine Formel

R₁-C(=CH₂)-CO-A-B-N⁺(R₂,R₃,R₄)X⁻

besitzen, wobei
R₁ Wasserstoff oder einen Methylrest,
R₂ einen Alkylrest mit 1 bis 6 Kohlenstoffatomen,
R₃ einen Alkylrest mit 1 bis 6 Kohlenstoffatomen,
R₄ einen Alkylrest mit 1 - 6 Kohlenstoffatomen oder einen Benzylrest,
A die Gruppierungen NH oder O,
B einen Alkylenrest oder Hydroxyalkylenrest mit 2 bis 6 Kohlenstoffatomen und
X ein Halogenid, Acetat oder Methosulfat bedeuten.

Für die Copolymerisation sind als nichtionische, hydrophob modifizierte Vinylmonomere Monomere besonders geeignet, die zumindest teilweise die allgemeine Formel

CH₂ = C(R₁)-CO-A-R₂

besitzen, wobei
R₁ Wasserstoff oder einen Methylrest,
R₂ einen Alkylrest mit 1 bis 10 Kohlenstoffatomen und A die Gruppierungen NH oder O bedeuten.

Die kationischen hydrophob modifizierten Vinylcomonomere besitzen vorteilhafterweise zumindest teilweise die allgemeine Formel

R₁-C(=CH₂)-CO-A-B-N⁺(R₂,R₃,R₄) X⁻

wobei
R₁ Wasserstoff oder einen Methylrest,
R₂ einen Alkylrest mit 1 bis 6 Kohlenstoffatomen,
R₃ einen Alkylrest mit 1 bis 6 Kohlenstoffatomen,
R₄ einen Alkylrest mit 1 - 6 Kohlenstoffatomen oder einen Benzylrest,
A die Gruppierungen NH oder 0,
B einen Alkylenrest oder Hydroxyalkylenrest mit 2 bis 6 Kohlenstoffatomen und
X ein Halogenid, Acetat oder Methosulfat bedeuten.

Unter diesen kationischen Vinylcomonomeren sind, u.a. aus Kostengründen Monomere vorteilhaft, bei denen
R₂ einen Methyl- oder Ethylrest,
R₃ einen Methyl- oder Ethylrest,
R₄ einen Methyl- oder Ethylrest,
B einen Alkylenrest oder Hydroxyalkylenrest mit 2 bis 4 Kohlenstoffatomen und
X ein Halogenid oder Methosulfat bedeuten.

Die kationischen Vinylcomonomere können auch zumindest teilweise aus Diallyldimethylammoniumchlorid, Vinylimidazoliumhalogenid, Vinylpyridiniumhalogenid bestehen.

Als nichtionische Vinylcomonomere eignen sich Monomere, die zumindest teilweise aus N-Methyl-N-Vinylacetamid und/oder aus Monomeren der allgemeinen Formel

CH₂=C(R₁)-CO-N-(R₂,R₃)

bestehen, wobei
R₁ Wasserstoff oder einen Methylrest,
R₂ Wasserstoff, einen Alkylrest oder einen Hydroxyalkylrest mit 1 bis 4 Kohlenstoffatomen und
R₃ Wasserstoff, einen Alkylrest oder einen Hydroxyalkylrest mit 1 bis 4 Kohlenstoffatomen bedeuten.

Das Verfahren wird weiterhin dadurch vereinfacht, daß die Pfropfcopolymere des Dispersionsstabilisators während der Polymerisation der wasserlöslichen Vinylmonomere erzeugt werden können, nachdem durch Radikalwechselwirkung radikalische Strukturen auf der Rückgratkette der Pfropfcopolymere gebildet wurden. Dadurch wird ein separater Verfahrensschritt eingespart, und das gesamte Verfahren vereinfacht. Die Pfropfcopolymere können leicht in Gegenwart eines kationischen Vinylmonomers durch Umsetzung von Polyethylenoxid mit Kaliumperoxidisulfat erzeugt werden.

Als Salze für die wäßrige Salzlösung eignen sich insbesondere anorganische Salze und/oder niedermolekulare polymere Ammoniumsalze bzw. deren Mischungen. Die niedermolekularen polymeren Ammoniumsalze besitzen vorteilhafterweise eine Molmasse kleiner 80000 g/mol. Als niedermolekulares Ammoniumsalz kann Poly(dimethyldiallyl-ammoniumchlorid) verwendet werden. Als anorganisches Salz eignen sich insbesondere Natriumchlorid, Natriumsulfat, Ammoniumchlorid, Ammoniumsulfat, Ammoniumcarbonat, Natriumdihydrogenphosphat, Dinatriumhydrogenphosphat.

Im folgenden werden einige beispielhafte Ausführungen des erfindungsgemäßen Verfahrens und der erfindungsgemäßen Stabilisatoren beschrieben.

### Beispiel 1

### Synthese des Dispersionsstabilisators

Ein thermostatierter innentemperaturgeregelter Doppelmantelreaktor mit Rührer, Rückflußkühler, Temperaturfühler und Gaseinleitungsvorrichtung wird mit 30 g einer 80 prozentigen wäßrigen Lösung von Methacryloyloxyethyltrimethylammoniumchlorid, 30 g Polyethylenoxid (Molekulargewicht beliebig zwischen 2 000 und 2 000 000 g/mol) und 270 g Wasser gefüllt. Dann wird die Apparatur unter ständigem Rühren eine Stunde mit Stickstoff gespült und danach auf 50° C temperiert. Danach werden 50 ml der Lösung entnommen, auf Raumtemperatur abgekühlt, 4 g Kaliumperoxidisulfat unter Rühren darin aufgeschlemmt und dann wieder dem Reaktor zugeführt. Anschließend wird die Reaktionsmischung auf Eis gegossen und durch Ultrafiltration (Membranausschlußgrenze 10 000 Dalton) von niedermolekularen Elektrolyten befreit. Durch Gefriertrocknung wird das Lösungsmittel entfernt. Nach Extraktion mit Aceton verbleibt das Pfropfcopolymer. Das Verhältnis Polyethereinheiten zu kationischen Einheiten liegt bei 2,5:1.

### Beispiel 2

In einem Reaktor wie in Beispiel 1 werden 26,5 g einer 75 prozentigen wäßrigen Lösung von Methacryloyloxethyldimethylbenzylammoniumchlorid, 17,7 Natriumchlorid, 1,5 g des Dispersionsstabilisators aus Beispiel 1 und 68,6 g entionisiertes Wasser gefüllt. Dann wird die Apparatur unter ständigem Rühren eine Stunde mit Stickstoff gespült und danach auf 50° C temperiert. Danach wird die Lösung von 0,271 g 2,2' Azobis (2-amidinopropan)hydrochlorid in 5 ml Wasser zugegeben. Unter ständigem Rühren wird noch 60 Minuten bei 50° C gehalten. Der Endumsatz beträgt 99 %, die Dispersion hat eine Viskosität von 20 mPas. Die Molmasse des Polymeren beträgt 2 * 10⁶ g/mol.

### Beispiel 3

Bei gleicher Verfahrensweise wie in Beispiel 2 werden 130,4 g Methacryloyloxyethyldimethylbenzylammoniumchlorid, 76 g Acrylamid, 159 g Natriumchlorid, 29 g des Stabilisators aus Beispiel 1, 794 g Wasser und 2,44 g des Azoinitiators eingesetzt. Nach 60 Minuten ist die Reaktion beendet.

Der Endumsatz ist 98 %, die Viskosität der resultierenden Dispersion beträgt 24 mPas.

### Beispiel 4

Bei gleicher Verfahrensweise wie in Beispiel 2 werden 145,1 g der Lösung von Methacryloyloxyethyldimethylbenzylammoniumchlorid, 88,9 Natriumchlorid, 24,1 g Polyethylenoxid (Molekulargewicht 1 000 000 g/mol) und 575,5 g Wasser eingesetzt. Nach Zugabe von 0,61 g des Azoinitiators, gelöst im 10 ml Wasser, erfolgen parallel die Homopolymerisation des kationischen Monomeren und die Pfropfcopolymerisation des kationischen Monomeren auf die Polyethylenoxidrückgratkette. Nach 100 Minuten ist die Reaktion beendet. Der Endumsatz ist 99 %, die Molmasse des Polymeren beträgt 8 * 10⁶ g/mol. Die Viskosität der resultierenden Dispersion ist 40 mPas.

### Beispiel 5

Bei gleicher Verfahrensweise wie im Beispiel 4 werden 171,5 g Methacryloyloxyethyldimethylbenzylammoniumchlorid-Lösung, 80,6 g Natriumchlorid, 32,7 g Polyethylenoxid (Molekulargewicht 35 000 g/mol), 532,4 g Wasser und 0,52 g Azoinitiator eingesetzt.

Die Reaktionsdauer beträgt 110 Minuten. Der Endumsatz ist 99 %, die Molmasse des Polymeren beträgt 3,2 * 10⁶ g/mol und die Viskosität der Dispersion 40 mPas.

### Beispiel 6

Bei gleicher Verfahrensweise wie im Beispiel 4 werden 128,5 g Methacryloyloxyethyldimethylbenzylammoniumchlorid-Lösung, 23,9 g Acrylamid, 105,8 g Natriumchlorid, 27,1 g Polyethylenoxid (Molekulargewicht 100 000 g/mol), 556,8 g Wasser und 0,47 g Azoinitiator eingesetzt. Nach 90 Minuten betragen der Umsatz 99 % und die Viskosität der Dispersion 25 mPas.

## Patentansprüche

1. Verfahren zur Herstellung von Dispersionen wasserlöslicher Vinylpolymere, wobei eine Mischung aus einer wässrigen Lösung von Salzen, einem Stabilisator, wasserlöslichen Vinylmonomeren und einem Initiator hergestellt und die wasserlöslichen Vinylmonomere in dieser Salzlösung radikalisch homo- und/oder copolymerisiert werden,
**dadurch gekennzeichnet,**
daß der Stabilisator aus einem Pfropfcopolymer besteht, dessen Rückgrat aus Polyethylenoxid und dessen Pfropfäste aus kationischen Vinylmonomeren gebildet sind.

2. Verfahren nach Anspruch 1, dadurch gekennzeichnet, daß kationische hydrophob modifizierte Vinylmonomere als wasserlösliche Vinylmonomere homopolymerisiert werden.

3. Verfahren nach einem der Ansprüche 1 und 2, dadurch gekennzeichnet, daß kationische hydrophob modifizierte und/oder nichtionische hydrophob modifizierte Vinylmonomere als wasserlösliche Vinylmonomere mit kationischen und/oder nichtionischen Vinylcomonomeren copolymerisiert werden.

4. Verfahren nach mindestens einem der vorhergehenden Ansprüche, dadurch gekennzeichnet, daß die Pfropfcopolymere durch Umsetzung von Polyethylenoxid mit Kaliumperoxodisulfat in Gegenwart eines kationischen Vinylmonomeren erzeugt werden.

5. Verfahren nach mindestens einem der vorhergehenden Ansprüche, dadurch gekennzeichnet, daß ein Stabilisator verwendet wird, dessen Pfropfäste aus den Monomeren Diallyldimethylammoniumchlorid, Vinylpyridiumhalogenid, N-Vinylimidazoliumhalogenid und/oder aus Monomeren der allgemeinen Formel
R₁-C(=CH₂)-CO-D-E-N⁺(R₂,R₃,R₄) X⁻
gebildet werden, wobei
R₁ Wasserstoff oder einen Methylrest,
R₂ einen Alkylrest mit 1 bis 2 Kohlenstoffatomen,
R₃ einen Alkylrest mit 1 bis 2 Kohlenstoffatomen,
R₄ einen Alkylrest mit 1 - 6 Kohlenstoffatomen oder einen Benzylrest,
D die Gruppierungen NH oder O,
E einen Alkylenrest oder Hydroxyalkylenrest mit 2 bis 6 Kohlenstoffatomen und
X ein Halogenid, Acetat oder Methosulfat bedeuten.

6. Verfahren nach mindestens einem der vorhergehenden Ansprüche, dadurch gekennzeichnet, daß ein Stabilisator verwendet wird, dessen Pfropfäste eine Molmasse zwischen 1000 und 3000000 g/mol besitzen

7. Verfahren nach mindestens einem der vorhergehenden Ansprüche, dadurch gekennzeichnet, daß ein Stabilisator verwendet wird, dessen Polyethylenoxid-Polymerrückgrat eine Molmasse zwischen 2000 und 2000000 g/mol besitzt.

8. Verfahren nach mindestens einem der vorhergehenden Ansprüche, dadurch gekennzeichnet, daß der Stabilisator in Mengen von 1 bis 10 Masse-% bezogen auf die Masse der eingesetzten, zu polymerisierenden wasserlöslichen Vinylmonomere eingesetzt wird.

9. Verfahren nach mindestens einem der vorhergehenden Ansprüche, dadurch gekennzeichnet, daß die Pfropfcopolymere durch Pfropfpolymerisation während der Polymerisation der wasserlöslichen Vinylmonomere erzeugt werden.

10. Verfahren nach mindestens einem der vorhergehenden Ansprüche, dadurch gekennzeichnet, daß als wasserlöslicher Initiator 2,2'-Azobis-(2-amidinpropan)hydrochlorid zugegeben wird.

11. Verfahren nach mindestens einem der vorhergehenden Ansprüche, dadurch gekennzeichnet, daß als Initiator ein radikalischer Initiator in einer Menge zwischen 10⁻³ und 2 Masse-% bezogen auf den gesamten Reaktionsansatz zugegeben wird.

12. Verfahren nach mindestens einem der Ansprüche 2 bis 11, dadurch gekennzeichnet, daß die kationischen, hydrophob modifizierten Vinylmonomere zumindest teilweise die allgemeine Formel
R₁-C(=CH₂)-CO-A-B-N⁺(R₂,R₃,R₄) X⁻
besitzen, wobei
R₁ Wasserstoff oder einen Methylrest,
R₂ einen Alkylrest mit 1 bis 6 Kohlenstoffatomen,
R₃ einen Alkylrest mit 1 bis 6 Kohlenstoffatomen,
R₄ einen Alkylrest mit 1 - 6 Kohlenstoffatomen oder einen Benzylrest,
A die Gruppierungen NH oder O,
B einen Alkylenrest oder Hydroxyalkylenrest mit 2 bis 6 Kohlenstoffatomen und
X ein Halogenid, Acetat oder Methosulfat bedeuten.

13. Verfahren nach mindestens einem der Ansprüche 3 bis 12, dadurch gekennzeichnet, daß die nichtionischen, hydrophob modifizierten Vinylmonomere zumindest teilweise die allgemeine Formel
CH₂ = C(R₁)-CO-A-R₂
besitzen, wobei
R₁ Wasserstoff oder einen Methylrest,
R₂ einen Alkylrest mit 1 bis 10 Kohlenstoffatomen und
A die Gruppierungen NH oder O bedeuten.

14. Verfahren nach mindestens einem der Ansprüche 3 bis 13, dadurch gekennzeichnet, daß die kationischen Vinylcomonomere zumindest teilweise die allgemeine Formel
R₁-C(=CH₂)-CO-A-B-N⁺(R₂,R₃,R₄) X⁻
besitzen, wobei
R₁ Wasserstoff oder einen Methylrest,
R₂ einen Alkylrest mit 1 bis 6 Kohlenstoffatomen,
R₃ einen Alkylrest mit 1 bis 6 Kohlenstoffatomen,
R₄ einen Alkylrest mit 1 - 6 Kohlenstoffatomen oder einen Benzylrest,
A die Gruppierungen NH oder O,
B einen Alkylenrest oder Hydroxyalkylenrest mit 2 bis 6 Kohlenstoffatomen und
X ein Halogenid, Acetat oder Methosulfat bestehen.

15. Verfahren nach Anspruch 14, dadurch gekennzeichnet, daß in der allgemeinen Formel für die kationischen Vinylcomonomere
R₂ einen Methyl- oder Ethylrest,
R₃ einen Methyl- oder Ethylrest,
R₄ einen Methyl- oder Ethylrest,
B einen Alkylenrest oder Hydroxyalkylenrest mit 2 bis 4 Kohlenstoffatomen und
X ein Halogenid oder Methosulfat bedeuten.

16. Verfahren nach Anspruch 3 bis 15, dadurch gekennzeichnet, daß die kationischen Vinylcomonomere zumindest teilweise aus Diallyldimethylammoniumchlorid, Vinylimidazoliumhalogenid, Vinylpyridiniumhalogenid bestehen.

17. Verfahren nach mindestens einem der Ansprüche 3 bis 16, dadurch gekennzeichnet, daß die nichtionischen Vinylcomonomere zumindest teilweise aus N-Methyl-N-Vinylacetamid und/oder aus Monomeren der allgemeine Formel
CH₂ = C(R₁)-CO-N-(R₂,R₃)
bestehen, wobei
R₁ Wasserstoff oder einen Methylrest,
R₂ Wasserstoff, einen Alkylrest oder einen Hydroxyalkylrest mit 1 bis 4 Kohlenstoffatomen und
R₃ Wasserstoff, einen Alkylrest oder einen Hydroxyalkylrest mit 1 bis 4 Kohlenstoffatomen bedeuten.

18. Verfahren nach mindestens einem der vorhergehenden Ansprüche, dadurch gekennzeichnet, daß als Salze für die wässrige Salzlösung anorganische Salze und/oder niedermolekulare polymere Ammoniumsalze und/oder deren Mischungen verwendet werden.

19. Verfahren nach Anspruch 18, dadurch gekennzeichnet, daß als anorganische Salze für die wässrige Salzlösung Natriumchlorid, Natriumsulfat, Ammoniumchlorid, Ammoniumsulfat, Ammoniumcarbonat, Natriumdihydrogenphosphat, Dinatriumhydrogenphosphat verwendet werden.

20. Verfahren nach Anspruch 18, dadurch gekennzeichnet, daß die niedermolekularen polymeren Ammoniumsalze eine Molmasse kleiner 80000 g/mol besitzen.

21. Verfahren nach Anspruch 18, dadurch gekennzeichnet, daß als niedermolekulares Ammoniumsalz Poly(dimethyldiallylammoniumchlorid) verwendet wird.

22. Verfahren nach mindestens einem der Ansprüche 18 bis 21, dadurch gekennzeichnet, daß die Salze in Mengen größer 5 Masse-% bezogen auf die Gesamtmasse des Reaktionsansatzes eingesetzt werden.

23. Verfahren nach mindestens einem der Ansprüche 18 bis 22, dadurch gekennzeichnet, daß die Salze in Mengen größer 7 Masse-% bezogen auf die Gesamtmasse des Reaktionsansatzes eingesetzt werden.

24. Verfahren nach mindestens einem der vorhergehenden Ansprüche, dadurch gekennzeichnet, daß die Polymerisation unter Schutzgas durchgeführt wird.

25. Verfahren nach mindestens einem der vorhergehenden Ansprüche, dadurch gekennzeichnet, daß die Polymerisation der Vinylmonomere bei einer Temperatur zwischen 30 und 80 °C durchgeführt wird.

26. Verfahren nach Anspruch 25, dadurch gekennzeichnet, daß die Polymerisation der Vinylmonomere bei einer Temperatur zwischen 40 und 60 °C durchgeführt wird.

27. Stabilisator zur Durchführung des Verfahrens gemäß mindestens einem der vorhergehenden Ansprüche,
**dadurch gekennzeichnet,**
daß er aus einem Pfropfcopolymer besteht, dessen Rückgrat aus Polyethylenoxid und dessen Pfropfäste aus kationischen Vinylmonomeren gebildet sind.

28. Stabilisator nach Anspruch 27, dadurch gekennzeichnet, daß die Pfropfäste aus den Monomeren Diallyldimethylammoniumchlorid, Vinylpyridiumhalogenid, N-Vinylimidazoliumhalogenid und/oder aus Monomeren der allgemeinen Formel
R₁-C(=CH₂)-CO-D-E-N⁺(R₂,R₃,R₄) X⁻
gebildet werden, wobei
R₁ Wasserstoff oder einen Methylrest,
R₂ einen Alkylrest mit 1 bis 2 Kohlenstoffatomen,
R₃ einen Alkylrest mit 1 bis 2 Kohlenstoffatomen,
R₄ einen Alkylrest mit 1 - 6 Kohlenstoffatomen oder einen Benzylrest,
D die Gruppierungen NH oder O,
E einen Alkylenrest oder Hydroxyalkylenrest mit 2 bis 6 Kohlenstoffatomen und
X ein Halogenid, Acetat oder Methosulfat bedeuten.

29. Stabilisator nach mindestens einem der Ansprüche 27 und 28, dadurch gekennzeichnet, daß die Pfropfäste eine Molmasse zwischen 1000 und 3000000 g/mol besitzen

30. Stabilisator nach mindestens einem der Ansprüche 27 bis 29, dadurch gekennzeichnet, daß das Polyethylenoxid-Polymerrückgrat eine Molmasse zwischen 2000 und 2000000 g/mol besitzt.

## Claims

1. A process for producing dispersions of water-soluble vinyl polymers, wherein a mixture of an aqueous solution of salts, a stabilizer, water-soluble vinyl monomers and an initiator is produced and the water-soluble vinyl monomers in this salt solution are radically homo and/or copolymerised, characterized in that the stabilizer consists of a graft copolymer whose backbone is formed from polyethylene oxide and whose graft branches are formed from cationic vinyl monomers.

2. A process according to claim 1, characterized in that cationic hydrophobically modified vinyl monomers as water-soluble vinyl monomers are homo-polymerised.

3. A process according to claim 1 or 2, characterized in that cationic hydrophobically modified and/or non-ionic hydrophobically modified vinyl monomers as water-soluble vinyl monomers are copolymerized with cationic and/or non-ionic vinyl co-monomers.

4. A process according to at least one of the preceding claims, characterized in that the graft copolymers are created by conversion of polyethylene oxide with potassium peroxodisulphate in the presence of a cationic vinyl monomer.

5. A process according to at least one of the preceding claims, characterized in that a stabilizer is used whose graft branches are formed from the monomers diallyldimethylammonium chloride, vinylpiridium halogenide, N-vinylimidazolium halogenide and/or from monomers of the general formula
R₁-C(=CH₂)-CO-D-E-N⁺(R₂,R₃,R₄) X⁻
wherein the meanings are:
R₁ hydrogen or a methyl residue
R₂ an alkyl residue with 1 to 2 carbon atoms,
R₃ an alkyl residue with 1 to 2 carbon atoms,
R₄ an alkyl residue with 1 - 6 carbon atoms or a benzyl residue,
D the NH or O groupings,
E an alkylene residue or hydroxyalkylene residue with 2 to 6 carbon atoms and
X a halogenide, acetate or methosulphate.

6. A process according to at least one of the preceding claims, characterized in that a stabilizer whose graft branches have a molar mass between 1000 and 3000000 g/mol is employed.

7. A process according to at least one of the preceding claims, characterized in that a stabilizer whose polyethylene oxide polymer backbone has a molar mass between 2000 and 2000000 g/mole is employed.

8. A process according to at least one of the preceding claims, characterized in that the stabilizer is used in amounts of 1 to 10 mass-% referred to the mass of the employed water-soluble vinyl monomers to be polymerised.

9. A process according to at least one of the preceding claims, characterized in that the graft copolymers are created by graft polymerization during the polymerization of the water-soluble vinyl monomers.

10. A process according to at least one of the preceding claims, characterized in that 2,2'-azobis- (2-amidinepropane) hydrochloride is added as water-soluble initiator.

11. A process according to at least one of the preceding claims, characterized in that a radical initiator is added as initiator in an amount between 10⁻³ and 2 mass-% referred to the total reaction formulation.

12. A process according to at least one of claims 2 to 11, characterized in that the cationic, hydrophobically modified vinyl monomers have at least partially the general formula,
R₁-C(=CH₂)-CO-A-B-N⁺(R₂,R₃,R₄) X⁻
wherein the meanings are:
R₁ hydrogen or a methyl residue
R₂ an alkyl residue with 1 to 6 carbon atoms,
R₃ an alkyl residue with 1 to 6 carbon atoms,
R₄ an alkyl residue with 1 - 6 carbon atoms or a benzyl residue,
A the NH or O groupings,
B an alkylene residue or hydroxyalkylene residue with 2 to 6 carbon atoms and
X a halogenide, acetate or methosulphate.

13. A process according to at least one of claims 3 to 12, characterized in that the non-ionic, hydrophobically modified vinyl monomers have at least partially the general formula
CH₂=C(R₁)-CO-A-R₂
wherein the meanings are:
R₁ hydrogen or a methyl residue,
R₂ an alkyl residue with 1 to 10 carbon atoms and
A the NH or O groupings.

14. A process according to at least one of claims 3 to 13, characterized in that the cationic vinyl co-monomers have at least partially the general formula,
R₁-C(=CH₂)-CO-A-B-N⁺(R₂,R₃,R₄) X⁻
wherein the meanings are:
R₁ hydrogen or a methyl residue
R₂ an alkyl residue with 1 to 6 carbon atoms,
R₃ an alkyl residue with 1 to 6 carbon atoms,
R₄ an alkyl residue with 1 - 6 carbon atoms or a benzyl residue,
A the NH or O groupings,
B an alkylene residue or hydroxyalkylene residue with 2 to 6 carbon atoms and
X a halogenide, acetate or methosulphate.

15. A process according to claim 14, characterized in that the meanings in the general formula for the cationic vinyl co-monomers are:
R₂ a methyl or ethyl residue,
R₃ a methyl or ethyl residue,
R₄ a methyl or ethyl residue,
B an alkylene residue or hydroxyalkylene residue with 2 to 4 carbon atoms and
X a halogenide or metho-sulphate.

16. A process according to claim 3 to 15, characterized in that the cationic vinyl co-monomers consist at least partially ofdiallyldimethyl ammonium chloride, vinylimidazolium halogenide, vinylpyridinium halogenide.

17. A process according to at least one of claims 3 to 16, characterized in that the non-ionic vinyl co-monomers consist at least partially of N-methyl-N-vinyl acetamide and/or monomers of the general formula
CH₂=C(R₁)-CO-N-(R₂, R₃)
wherein the meanings are:
R₁ hydrogen or a methyl residue,
R₂ hydrogen, an alkyl residue or a hydroxyalkyl residue with 1 to 4 carbon atoms and
R₃ hydrogen, an alkyl residue or a hydroxyalkyl residue with 1 to 4 carbon atoms.

18. A process according to at least one of the preceding claims, characterized in that inorganic salts and/or lower molecular polymeric ammonium salts and/or their mixtures are used as salts for the aqueous salt solution.

19. A process according to claim 18, characterized in that sodium chloride, sodium sulphate, ammonium chloride, ammonium sulphate, ammonium carbonate, sodium di-hydrogen phosphate, di-sodium hydrogen phosphate are used as inorganic salts for the aqueous salt solution.

20. A process according to claim 18, characterized in that the lower molecular polymeric ammonium salts have a molar mass smaller than 80000 g/mol.

21. A process according to claim 18, characterized in that poly(dimethyldiallyl ammonium chloride) is used as lower molecular ammonium salt.

22. A process according to at least one of claims 18 to 21, characterized in that the salts are used in amounts greater than 5 mass-% referred to the total mass of the reaction formulation.

23. A process according to at least one of claims 18 tp 22, characterized in that the salts are used in amounts greater than 7 mass-% referred to the total mass of the reaction formulation.

24. A process according to at least one of the preceding claims, characterized in that the polymerization is carried out under protective gas.

25. A process according to at least one of the preceding claims, characterized in that the polymerization of the vinyl monomers is carried out at a temperature between 30 and 80°C.

26. A process according to claim 25, characterized in that the polymerization of the vinyl monomers is carried out a temperature between 40 and 60°C.

27. A stabilizer for carrying out the process according to at least one of the preceding claims, characterized in that it consists of a graft copolymer, whose backbone is formed from polyethylene oxide and whose graft branches are formed from cationic vinyl monomers.

28. A stabilizer according to claim 27, characterized in that the graft branches are formed from the monomers diallyldimethylammonium chloride, vinylpiridium halogenide, N-vinylimidazolium halogenide and/or from monomers of the general formula
R₁-C(=CH₂)-CO-D-E-N⁺(R₂,R₃,R₄) X⁻
wherein the meanings are:
R₁ hydrogen or a methyl residue
R₂ an alkyl residue with 1 to 2 carbon atoms,
R₃ an alkyl residue with 1 to 2 carbon atoms,
R₄ an alkyl residue with 1 - 6 carbon atoms or a benzyl residue,
D the NH or O groupings,
E an alkylene residue or hydroxyalkylene residue with 2 to 6 carbon atoms and
X a halogenide, acetate or methosulphate.

29. A stabilizer according to claim 27 or 28, characterized in that the graft branches have a molar mass between 1000 and 3000000 g/mol.

30. A stabilizer according to at least one of claims 27 to 29, characterized in that the polyethylene oxide polymer backbone has a molar mass between 2000 and 2000000 g/mol.

## Revendications

1. Procédé de production de dispersions de polymères vinyliques solubles dans l'eau, dans lequel on produit un mélange à base d'une solution aqueuse de sels, d'un agent stabilisant, de monomères vinyliques solubles dans l'eau, et d'un déclencheur et on homo- et/ou copolymérise les monomères vinyliques dans cette solution de sel par voie radicalaire,
caractérisé en ce que
l'agent stabilisant consiste en un copolymère greffé dont le squelette est formé d'oxyde de polyéthylène et dont les branches greffées sont formées de monomères vinyliques cationiques.

2. Procédé selon la revendication 1,
caractérisé en ce que
les monomères vinyliques cationiques modifiés d'une manière hydrophobe sont homopolymérisés sous forme de monomères vinyliques solubles dans l'eau.

3. Procédé selon l'une des revendications 1 et 2,
caractérisé en ce que
les monomères vinyliques cationiques modifiés d'une manière hydrophobe et/ou les monomères vinyliques non ioniques modifiés d'une manière hydrophobe sont polymérisés sous forme de monomères vinyliques solubles dans l'eau avec des comonomères vinyliques cationiques et/ou non ioniques.

4. Procédé selon au moins une des revendications précédentes,
caractérisé en ce que
les polymères greffés sont produits par réaction d'oxyde de polyéthylène avec du peroxodisulfate de potassium en présence d'un monomère vinylique cationique.

5. Procédé selon au moins une des revendications précédentes,
caractérisé en ce qu'
on utilise un agent stabilisant dont les branches greffées sont formées à partir des monomères-chlorure de diallyldiméthylammonium, halogénure de vinylpyridium, halogénure de N-vinylimidazolium, et/ou à partir de monomères de formule générale :
R₁-C(=CH₂)-CO-D-E-N⁺(R₂,R₃,R₄) X⁻
dans laquelle
R₁ signifie de l'hydrogène ou un radical méthyle,
R₂ signifie un radical alkyle ayant 1 à 2 atomes de carbone,
R₃ signifie un radical alkyle ayant 1 à 2 atomes de carbone,
R₄ signifie un radical alkyle ayant de 1 à 6 atomes de carbone ou un radical benzyle,
D signifie les groupements NH ou O
E signifie un radical alkylène ou un radical hydroxyalkylène ayant de 2 à 6 atomes de carbone et,
X signifie un halogénure, un acétate ou un méthosulfate.

6. Procédé selon au moins une des revendications précédentes,
caractérisé en ce qu'
on utilise un agent stabilisant dont les branches greffées possèdent une masse molaire comprise entre 1000 et 3.000.000 g/mol.

7. Procédé selon au moins une des revendications précédentes,
caractérisé en ce qu'
on utilise un agent stabilisant dont le squelette d'oxyde de polyéthylène-polymère possède une masse molaire comprise entre 2000 et 2.000.000 g/mol.

8. Procédé selon au moins une des revendications précédentes,
caractérisé en ce qu'
on met en oeuvre l'agent stabilisant en quantités allant de 1 à 10 % en masse par rapport à la masse des monomères vinyliques mis en oeuvre, solubles dans l'eau, à polymériser.

9. Procédé selon au moins une des revendications précédentes,
caractérisé en ce qu'
on produit les copolymères greffés par polymérisation par greffage pendant la polymérisation des monomères vinyliques solubles dans l'eau.

10. Procédé selon au moins une des revendications précédentes,
caractérisé en ce qu'
on ajoute comme déclencheur soluble dans l'eau, le chlorhydrate de 2,2'-azobis(2-aminopropane).

11. Procédé selon au moins une des revendications précédentes,
caractérisé en ce qu'
on ajoute comme déclencheur, un déclencheur radicalaire en une quantité comprise entre 10⁻³ et 2 % en masse par rapport à la totalité de l'échantillon de réaction.

12. Procédé selon au moins une des revendications 2 à 11, caractérisé en ce que
les monomères vinyliques cationiques, modifiés d'une manière hydrophobe, possèdent au moins partiellement, la formule générale :
R₁-C(=CH₂)-CO-A-B-N⁺(R₂,R₃,R₄) X⁻
dans laquelle
R₁ signifie de l'hydrogène ou un radical méthyle,
R₂ signifie un radical alkyle ayant de 1 à 6 atomes de carbone,
R₃ signifie un radical alkyle ayant de 1 à 6 atomes de carbone,
R₄ signifie un radical alkyle ayant de 1 à 6 atomes de carbone ou un radical benzyle,
A signifie les groupements NH ou O
B signifie un radical alkylène ou un radical hydroxyalkylène ayant de 2 à 6 atomes de carbone et,
X signifie un halogénure, un acétate ou un méthosulfate.

13. Procédé selon au moins une des revendications 3 à 12,
caractérisé en ce que
les monomères vinyliques non ioniques modifiés d'une manière hydrophobe, possèdent au moins partiellement la formule générale :
CH₂=C(R₁)-CO-A-R₂
dans laquelle,
R₁ signifie de l'hydrogène ou un radial méthyle,
R₂ signifie un radical alkyle ayant de 1 à 10 atomes de carbone, et
A signifie les groupement NH ou O.

14. Procédé selon au moins une des revendications 3 à 13,
caractérisé en ce que
les comonomères vinyliques cationiques possèdent au moins partiellement la formule générale
R₁-C(=CH₂)-CO-A-B-N⁺(R₂,R₃,R₄) X⁻
dans laquelle
R₁ signifie de l'hydrogène ou un radical méthyle,
R₂ signifie un radical alkyle ayant de 1 à 6 atomes de carbone,
R₃ signifie un radical alkyle ayant de 1 à 6 atomes de carbone,
R₄ signifie un radical alkyle ayant de 1 à 6 atomes de carbone ou un radical benzyle,
A signifie les groupements NH ou O
B signifie un radical alkylène ou un radical hydroxyalkylène ayant de 2 à 6 atomes de carbone et,
X signifie un halogénure, un acétate ou un méthosulfate.

15. Procédé selon la revendication 14,
caractérisé en ce que
dans la formule générale pour les comonomères vinyliques cationiques,
R₂ signifie un radical méthyle ou éthyle,
R₃ signifie un radical méthyle ou éthyle,
R₄ signifie un radical méthyle ou éthyle,
B signifie un radical alkylène ou hydroxyalkylène ayant de 2 à 4 atomes de carbone et,
X signifie un halogénure ou un méthosulfate.

16. Procédé selon les revendications 3 à 15,
caractérisé en ce que
les comonomères vinyliques cationiques consistent au moins partiellement en du chlorure de diallyldiméthylammonium, en un halogénure de vinylimidazolium ou un halogénure de vinylpyridinium.

17. Procédé selon au moins une des revendications 3 à 16,
caractérisé en ce que
les comonomères vinyliques non ioniques consistent au moins partiellement en du N-méthyl-N-vinylacétamide et/ou en des monomères de formule générale :
CH₂=C(R₁)-CO-N-(R₂,R₃)
dans laquelle
R₁ signifie de l'hydrogène, ou un radical méthyle,
R₂ signifie de l'hydrogène, un radical alkyle ou un radical hydroxyalkyle ayant de 1 à 4 atomes de carbone, et
R₃ signifie de l'hydrogène, un radical alkyle ou un radical hydroxyalkyle ayant de 1 à 4 atomes de carbone.

18. Procédé selon au moins une des revendications précédentes,
caractérisé en ce que
comme sels pour la solution aqueuse de sel, on utilise des sels minéraux et/ou des sels d'ammonium polymères à bas poids moléculaire et/ou leurs mélanges.

19. Procédé selon la revendication 18,
caractérisé en ce que
comme sels minéraux pour la solution aqueuse de sel on utilise le chlorure de sodium, le sulfate de sodium, le chlorure d'ammonium, le sulfate d'ammonium, le carbonate d'ammonium, le dihydrogénophosphate de sodium et l'hydrogénophosphate disodique.

20. Procédé selon la revendication 18,
caractérisé en ce que
les sels d'ammonium polymères à bas poids moléculaire possèdent une masse molaire inférieure à 80.000 g/mol.

21. Procédé selon la revendication 18,
caractérisé en ce qu'
on utilise comme sel d'ammonium à bas poids moléculaire, le poly(chlorure de diméthyldiallylammonium).

22. Procédé selon au moins une des revendications 18 à 21,
caractérisé en ce qu'
on met en oeuvre les sels en quantités plus grandes que 5 % en masse par rapport à la masse totale de l'échantillon de réaction.

23. Procédé selon au moins une des revendications 18 à 22,
caractérisé en ce qu'
on met en oeuvre les sels en des quantités plus grandes que 7 % en masse par rapport à la masse totale de l'échantillon de réaction.

24. Procédé selon au moins une des revendications précédentes,
caractérisé en ce que
la polymérisation est effectuée sous gaz protecteur.

25. Procédé selon au moins une des revendications précédentes,
caractérisé en ce que
la polymérisation des monomères vinyliques est effectuée à une température comprise entre 30 et 80°C.

26. Procédé selon la revendication 25,
caractérisé en ce que
la polymérisation des monomères vinyliques est effectuée à une température comprise entre 40 et 60°C.

27. Agent stabilisant pour l'exécution du procédé conformément à au moins une des revendications précédentes,
caractérisé en ce qu'
il consiste en un copolymère greffé dont le squelette est formé d'oxyde de polyéthylène et dont les branches greffées sont formées de monomères vinyliques cationiques.

28. Agent stabilisant selon la revendication 27,
caractérisé en ce que
les branches greffées sont formées à base des monomères chlorure de diallyldiméthylammonium, halogénure de vinylpyridium, halogénure de N-vinylimidazolium et/ou à base de monomères de formule générale :
R₁-C(=CH₂)-CO-D-E-N⁺(R₂,R₃,R₄) X⁻
dans laquelle
R₁ signifie de l'hydrogène ou un radical méthyle,
R₂ signifie un radical alkyle ayant de 1 à 2 atomes de carbone,
R₃ signifie un radical alkyle ayant de 1 à 2 atomes de carbone,
R₄ signifie un radical alkyle ayant de 1 à 6 atomes de carbone ou un radical benzyle,
D signifie les groupements NH ou O
E signifie un radical alkylène ou un radical hydroxyalkylène ayant de 2 à 6 atomes de carbone et,
X signifie un halogénure, un acétate ou un méthosulfate.

29. Agent stabilisant selon au moins une des revendications 27 et 28,
caractérisé en ce que
les branches greffées possèdent une masse molaire comprise entre 1000 et 3.000.000 g/mol.

30. Agent stabilisant selon au moins une des revendications 27 à 29,
caractérisé en ce que
le squelette oxyde de polyéthylène/polymère possède une masse molaire comprise entre 2000 et 2.000.000 g/mol.
